# EUROPEAN PATENT APPLICATION

(11) **EP 4 775 447 A1**
(43) Date of publication of application: **15.07.2026**
(21) Application number: 25151820.5
(22) Date of filing: 14.01.2025
(51) Int. Cl.: B60P 1/28

(54) **A WORKING MACHINE HAVING A DUMP BODY**

(71) Applicant: Volvo Construction Equipment AB, 631 85 Eskilstuna (SE)
(72) Inventor: SKÖLDBERG, Per-Anders, 35261 VÄXJÖ (SE)
(74) Representative: Kransell & Wennborg KB

(57) **Abstract**

A working machine (1) having a dump body (3) configured to carry material (50). The working machine comprises: an electric drive line (8) comprising an electric traction machine (10) powered by a battery pack (12) or a fuel cell (14); a fuel supply system (110) including a fuel tank (112) configured to store gaseous or liquid fuel, the fuel supply system being separate and independent of the electric drive line; a catalytic heater (120) configured to produce heated gases using the fuel from the fuel tank; a dump body heating system (130) configured to receive the heated gases from the catalytic heater to heat the dump body. The working machine (1) further comprises a control system (17) comprising processing circuitry (18) configured to: in response to identifying a predefined condition, activate the catalytic heater by supplying fuel from the fuel tank.

## Description

### TECHNICAL FIELD

The disclosure relates generally to working machines. In particular aspects, the disclosure relates to a working machine having a dump body. The disclosure can be applied to heavy-duty vehicles, such as construction equipment, among other vehicle types. Although the disclosure may be described with respect to a particular vehicle, the disclosure is not restricted to any particular vehicle, unless explicitly stated so.

### BACKGROUND

In working machines such as dumpers or haulers, material adhering to the dump body after unloading, commonly referred to as "carry-back", is a persistent issue. This residual material reduces the effective payload capacity of the working machine, negatively impacting productivity and efficiency. Conventional solutions often rely on exhaust gases from combustion engines to heat the dump body, creating enough thermal expansion and movement between adhered material and the dump body to release stuck material. However, such systems are unsuitable for electric or fuel cell-powered working machines, which lack exhaust gases as a heat source.

Existing alternatives, such as mechanical vibration systems or electrically powered heating elements, suffer from drawbacks such as energy inefficiency, increased wear on components, and limited effectiveness in adverse weather or with certain material types. In cold environments, adhesion of material to the dump body can be particularly cumbersome. Moreover, additional thermal management challenges arise in cold environments as heating both the cabin and battery pack and/or fuel cell to maintain operational temperatures typically consumes a significant portion of the available energy.

Consequently, there is a need for an efficient, reliable, and environmentally friendly heating solution that can adapt to varying conditions and materials, while being compatible with modern electric and fuel cell-powered working machines.

### SUMMARY

According to a first aspect of the disclosure, a working machine having a dump body configured to carry material is provided. The working machine comprises: an electric drive line comprising an electric traction machine powered by a battery pack or a fuel cell; a fuel supply system including a fuel tank configured to store gaseous or liquid fuel, the fuel supply system being separate and independent of the electric drive line; a catalytic heater configured to produce heated gases using the fuel from the fuel tank; a dump body heating system configured to receive the heated gases from the catalytic heater to heat the dump body; and a control system comprising processing circuitry configured to: determine a predefined condition associated with a risk of material adhering to the dump body; in response to identifying the predefined condition, activate the catalytic heater by supplying fuel from the fuel tank; and in response to identifying an absence of the predefined condition, deactivate the catalytic heater by ceasing the supply of fuel from the fuel tank. The first aspect of the disclosure may seek to solve problems with material adhesion in the dump body of working machines, particularly for working machines with electric drive lines or electric drive systems lacking exhaust heat as a heating source. A technical benefit may include an improved energy-efficient heating solution for preventing material adhesion to the dump body, the solution potentially enabling the use of environmentally friendly fuel. The disclosed technology according to the first aspect provides an efficient and adaptive dump body heating system for electric and/or fuel cell-driven working machines. By providing a catalytic heater powered by a dedicated, independent fuel source, effective heating of the dump body is achieved without relying on the electric drive line used for propelling the working machine, or relying on exhaust gases from a combustion engine. By not relying on the drive line used for propelling the working machine, energy intended for the propulsion system is not used by the dump body heating system, and thus the dump body heating system in not linked to shortening the driving range for a given propulsion energy capacity (e.g. battery capacity). By the first aspect, an improved dump body heating system is provided. The dump body heating system is typically at least partly arranged in the dump body.

The electric drive line may be comprised in an electric drive system. The electric drive system may comprise the electric drive line, transmission e.g. including at least a gearbox, drive shafts and/or drive wheels. The electric drive system may be comprised in the working machine. A technical benefit may include improved compatibility with electric and fuel cell systems of the vehicle.

Optionally in some examples, including in at least one preferred example, further comprising a second heating system configured to receive heated gases from the catalytic heater to heat a component of the working machine externally of the dump body. A technical benefit may include improved thermal management for multiple components of the working machine. Thus, in addition to the dump body heating system, the catalytic heater may be configured to provide heated gases to the second heating system. The second heating system is thus second to the dump body heating system.

Optionally in some examples, including in at least one preferred example, the second heating system is configured to heat the battery pack or fuel cell. A technical benefit may include a configuration enabling maintaining desired, or optimal operating temperatures for the battery pack or fuel cell. For example, the second heating system is arranged to at least partly encompass the battery pack or fuel cell.

Optionally in some examples, including in at least one preferred example, the second heating system is configured to heat a cabin of the working machine. A technical benefit may include a configuration enabling providing cabin or operator comfort in cold climates, e.g. without relying on additional energy from the electric driveline. Thus, and according to one example, the cabin of the working machine is not heated by an electrical heating system. The second heating system may e.g. be configured as a radiator in which the heated gases is configured to be guided to.

Optionally in some examples, including in at least one preferred example, the processing circuitry is further configured to receive input from a monitoring arrangement, the monitoring arrangement including at least one of: a sensor configured to measure the weight of the material carried in the dump body; a thermal sensor configured to measure the temperature of the dump body; an environmental sensor configured to measure the surrounding temperature of the working machine; a sensor configured to detect material composition such as e.g. water content of the material carried in the dump body; a sensor configured to detect the presence of material adhered to the dump body. A technical benefit may include precise and adaptive control of the dump body heating system. Hereby, the catalytic heater may be operated in response to input from varying sensors of the vehicle, and may thus be configured for adapted operation in varying conditions. The sensor configured to measure the weight of the material carried in the dump body may be referred to as a weight sensor. The sensor configured to detect material composition such as e.g. water content of the material carried in the dump body, may include optical sensors (e.g. a first optical sensor) or cameras that are configured to analyze the spectral properties of the material to infer its composition, e.g. with regards to water content or type of material. For example, near-infrared (NIR) sensors or hyperspectral cameras can be used to determine moisture content based on the reflectance or absorption characteristics of the material. The sensor configured to detect the presence of material adhered to the dump body may include optical sensors (e.g. a second optical sensor), radar sensors or similar systems capable of measuring surface profiles or material thickness. Such sensor may operate by emitting radio waves and analyzing the reflected signals to detect irregularities caused by adhered material. Alternatively, optical cameras or laser-based systems, such as LiDAR, may be used to capture and analyze visual or depth data to identify areas where material remains attached to the dump body.

Optionally in some examples, including in at least one preferred example, the predefined condition is defined at least by one of: the weight of material carried in the dump body; the temperature of the dump body; the surrounding temperature of the working machine; the material composition; the presence of material adhered to the dump body. A technical benefit may include a configuration enabling adaptable definition of the predefined condition. The predefined condition may e.g. be defined by real-time input from one or more of the previously mentioned sensors of the monitoring arrangement. Hereby, heating of the dump body may be based on suitable, and potentially real-time, operating conditions. Additionally or alternatively, the predefined condition may be at least partly based on data already known, so called pre-acquired data, e.g. data from a weather forecast or known data of the material carried in the dump body (or to be carried by dump body). As a further alternative, the predefined condition may be at least partly based on real-time input from one or more of sensors of the monitoring arrangement (e.g. the thermal sensor), and at least partly based on pre-acquired data, e.g. data from a weather forecast or known data of the material carried in the dump body.

Optionally in some examples, including in at least one preferred example, the predefined condition is defined at least by one of: the weight of material carried in the dump body is above a predefined first threshold value; the temperature of the dump body is below a predefined second threshold value; the surrounding temperature of the working machine is below a predefined third threshold value; the material composition is corresponding to a material composition included in a predefined list of material compositions; the presence of material adhered to the dump body is detected to be above a predefined fourth threshold value. A technical benefit may include a configuration enabling adaptable definition of the predefined condition. For example, by using one or more of the specifically mentioned criteria, a targeted activation of the dump body heating system may be provided.

Optionally in some examples, including in at least one preferred example, the processing circuitry is configured to receive input data of at least one of: the predefined first threshold value, the predefined second threshold value, the predefined third threshold value, the predefined list of material compositions, the predefined fourth threshold value. A technical benefit may include operational customization of the predefined condition based on the first, second, third and/or fourth threshold value and/or the predefined list. For example, the first, second, third and/or fourth threshold value and/or the predefined list may be set in response to specific worksite conditions of the working machine, or specific material conditions of the material carried in the dump body. The first, second, third and/or fourth threshold value and/or the predefined list may be comprised in a look-up table in a memory of the control system.

Optionally in some examples, including in at least one preferred example, the control system includes a user interface configured to allow an operator to adjust at least one of: the predefined first threshold value, the predefined second threshold value, the predefined third threshold value, the predefined list of material compositions, the predefined fourth threshold value. A technical benefit may include a configuration enabling real-time setting of the first, second, third and/or fourth threshold value and/or the predefined list, e.g. based on (changing) worksite conditions. The first, second, third and/or fourth threshold value and/or the predefined list may in addition, or as an alternative, be set by a centralized worksite system. Hereby, consistent control across multiple working machines may be enabled.

Optionally in some examples, including in at least one preferred example, the control system includes a user interface configured to allow an operator to override the activation and deactivation of the catalytic heater in response to the predefined condition, and thus enabling manual activation or deactivation of the catalytic heater independently of the predefined condition. A technical benefit may include improved operator flexibility, e.g. in unforeseen situations.

Optionally in some examples, including in at least one preferred example, the predefined condition is identified in response to input from the monitoring arrangement. A technical benefit may include a configuration enabling adaptable definition of the predefined condition, possibly using real-time data.

Optionally in some examples, including in at least one preferred example, the fuel supply system is a fossil-free fuel supply system wherein the fuel is selected from the group consisting of: hydrogen; biogas and bioethanol. A technical benefit may include reduced environmental impact and compatibility with sustainable energy goals. Additional fuels, such as biomethanol, may also be used, including fuels derived from fossil-free sources that do not contribute with additional carbon dioxide to the atmosphere.

Optionally in some examples, including in at least one preferred example, the dump body heating system comprises at least one channel arranged within the dump body, the at least one channel being arranged to distribute the heated gases from the catalytic heater throughout the dump body. A technical benefit may include uniform heat distribution across the dump body. Thus, the channel may be arranged within the dump body to achieve uniform heat distribution across the dump body, or at least over a predefined area of the dump body (such as the bottom of the dump body). The at least one channel may be a plurality of channels, or comprise a plurality of channel portions.

Optionally in some examples, including in at least one preferred example, further comprising at least one channel outlet arranged in the dump body for discharging the heated gases to the surrounding. A technical benefit may include improved gas flow efficiency. Thus, the channel outlet is arranged to discharge the heated gases after circulation in the heat flow channel. The at least one channel outlet may be a plurality of channel outlets, or may be formed as a common channel outlet from a plurality of channel portions or a plurality of channels. The channel outlet(s) may be arranged in an end portion of the working machine opposite to a cabin. For example, the channel outlet(s) may be arranged to face away from the dump body, or to face away from a rear portion of the dump body.

Optionally in some examples, including in at least one preferred example, the processing circuitry is further configured to determine the temperature of the dump body, and in response to that the temperature of the dump body is above an upper predefined threshold, deactivate the catalytic heater by ceasing the supply of fuel from the fuel tank. A technical benefit may include preventing overheating of the dump body. Overheating of the dump body could otherwise worsen material adherence (or material sticking) by causing material to "burn" onto the surface of the dump body, rather than loosen. That is, if the temperature of the dump body gets too high, there is a risk of worsening material adherence/sticking due to thermal degradation of the material. The predefined condition for activating or deactivating the catalytic heater may be defined within a temperature interval where material adhesion is effectively mitigated without causing damage or undesirable thermal effects.

Optionally in some examples, including in at least one preferred example, the processing circuitry is configured to identify the predefined condition by identifying that a material carried by the dump body, or to be loaded to the dump body, has a material composition included in a predefined list of material compositions, and wherein the processing circuitry is further configured to activate the catalytic heater in response to identifying the predefined condition. A technical benefit may include the ability to tailor heating of the dump body to specific materials known to adhere to the dump body. Hereby, energy usage and adhesion prevention can be improved. The predefined list may that previously presented. For example, the predefined list may comprise a look-up table with specific materials known to adhere to the dump body. Certain materials are more prone to adhesion under specific conditions, potentially regardless of other factors, e.g. clay, gypsum and similar material. As previously presented, the predefined condition may in addition to the parameter of material composition, be based on other parameters, e.g. input from the monitoring arrangement. Thus, by the adaptive predefined condition (e.g. by the first, second, third and fourth thresholds) variations in weather, seasons, or operational requirements can be set with regards to the specific material in the dump body. This adaptability provides a dump body heating system functioning optimally for different material compositions and various operating environments.

It should be mentioned that the catalytic heater may be used to pre-heat the dump body before loading material thereto, or to heat it during operation. A technical benefit may include improved material adhesion prevention.

Optionally in some examples, including in at least one preferred example, the catalytic heater is configured for flameless operation. A technical benefit may include enhanced safety and reduced emissions during operation. Thus, the dump body heating system may be suitable for environments or worksites with stringent safety or environmental regulations.

Optionally in some examples, including in at least one preferred example, the catalytic heater is configured to operate by catalytic combustion, generating heat through a flameless oxidation reaction between the fuel and oxygen in the presence of a catalyst. A technical benefit may include efficient heat generation with minimal emissions, contributing to sustainable and environmentally friendly operation of heating the dump body. Thus, the catalytic heater may be configured to facilitate efficient combustion at low temperatures, reducing fuel consumption and preventing excessive heat generation that could harm machine components or exacerbate material adhesion.

Optionally in some examples, including in at least one preferred example, the catalyst in the catalytic heater consists of or comprises a material selected from the group of: platinum; palladium; rhodium. A technical benefit may include reliable and efficient catalytic reactions at low temperatures, ensuring consistent performance of the dump body heating system.

At least some of the components previously mentioned may preferably be arranged to the rear frame of the working machine. For example, the catalytic heater is preferably arranged on the rear frame of the working machine. This configuration may avoid the need to route heated gases or exhaust over articulation and steering joints of the working machine, while placing the catalytic heater closer to its primary consumer, the dump body. For cabin heating or heating of the battery pack or fuel cell by the second heating system, a heat exchanger may be arranged to heat exchange the heated gases in the dump body heating system with the second heating system.

Optionally in some examples, the working machine of the first aspect is an autonomously driven working machine. A technical benefit may include reduced need for manual intervention and enhanced efficiency. Autonomously driven working machines may include equipment such as radar sensors for obstacle detection, LiDAR systems for mapping, cameras for monitoring the worksite, and GPS systems for navigation. These components can work in tandem with the heating system to optimize working machine performance in autonomous operations.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG.** 1 is an exemplary, partly schematic, side view of a working machine having a dump body according to one example.
**FIG.** 2 is an exemplary, partly schematic, side view of a working machine having a dump body according to one example.
**FIG.** 3 is a schematic diagram of an exemplary computer system for implementing examples disclosed herein, according to one example.

### DETAILED DESCRIPTION

The detailed description set forth below provides information and examples of the disclosed technology with sufficient detail to enable those skilled in the art to practice the disclosure.

The disclosed technology may solve problems related to material adhesion in the dump body and energy-efficient operation of dump body heating system. This is particularly suitable for working machines having electric drive lines or electric drive systems lacking exhaust heat as a heating source, e.g. particularly for electric and fuel cell-powered working machines. The disclosed technology uses a catalytic heater powered by a separate fuel system to produce heated gases, which are used to heat the dump body and optionally other components such as the battery pack or cabin. The catalytic heater operates independently of the battery pack or fuel cell used for propelling the working machine, thereby preserving the primary energy source for propulsion and other critical functions. A technical benefit may include improved energy efficiency of the dump body heating system and/or enhanced performance of the working machine in adverse operating conditions, such as cold climates or when handling materials prone to adhesion. By using a catalytic heater and an independent fuel supply for the catalytic heater, the invention enables effective heating without depleting the primary energy source, while maintaining compatibility with fossil-free fuels for environmentally friendly operation.

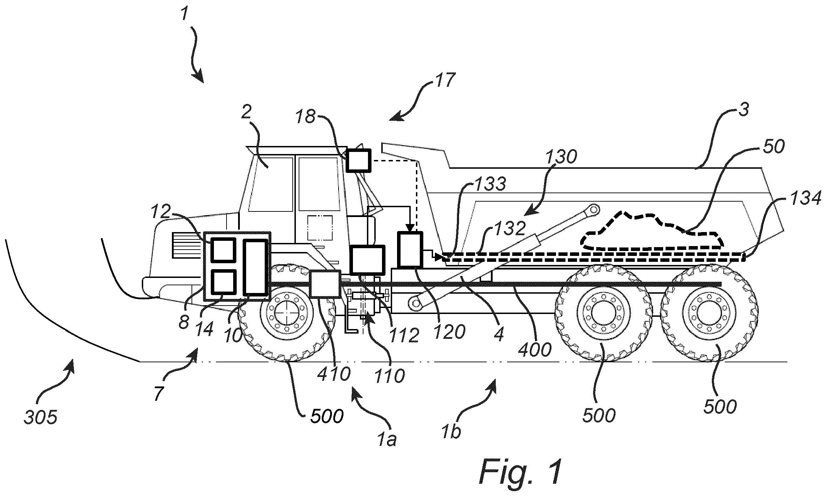

**FIG. 1** shows an exemplary working machine 1 in the form of a dumper operating in a worksite 305. The working machine 1 may e.g. be an autonomously driven working machine. The working machine 1 is an electric vehicle, such as a full electric vehicle, comprising an electric drive system 7 including an electric drive line 8, a transmission 410 comprising at least a gearbox, and drive shafts 400 schematically shown to transfer motion to the drive wheels 500. The electric drive line 8 comprises an electric traction machine 10 powered by a battery pack 12 or a fuel cell 14. Even though a centrally arranged electric drive system 7 with one electric traction machine 10 is exemplified in Fig. 1, the working machine 1 may comprise a de-centralized arranged electric drive system with one electric traction machine for each drive shaft associated with a pair of drive wheels. In the example of Fig. 1, one battery pack 12 is shown, but it should be mentioned that the working machine 1 may comprise a plurality of battery packs for powering the electric traction machine 10. Any battery pack being configured to power the electric traction machine 10 may be referred to as a traction battery pack.

As shown in Fig. 1, the working machine is a dumper (or loader) having a dump body 3 configured to carry material 50. For example, the working machine may comprise a tilting arrangement including at least one tilting cylinder 4 configured to tilt the dump body 3 to bring the dumper into a dumping state. Hereby, the material 50 carried by the dump body 3 may be unloaded. The working machine 1 may comprise at least two frames, a first frame 1a or front frame supporting a cabin 2 of the working machine 1, and a second frame 1b or rear frame supporting the dump body 3.

The working machine 1 further comprises a fuel supply system 110 including a fuel tank 112 configured to store gaseous or liquid fuel. The fuel supply system 110 is separate and independent of the electric drive line 8. The fuel supply system 110 is typically separate and independent of the electric drive system 7, or any drive line or drive system of the working machine 1. For example, the fuel supply system 110 is not configured to supply any traction machine or traction engine of the working machine 1. In other words, the gaseous or liquid fuel of the fuel tank 112 is not used for propelling the working machine 1. For example, the fuel supply system 110 is not used for supplying the optional fuel cell 14 with gaseous or liquid fuel. The fuel supply system 110 is preferably a fossil-free fuel supply system wherein the fuel in the fuel tank 112 is a fossil-free fuel. The fossil-free fuel may e.g. be selected from the group consisting of: hydrogen; biogas and bioethanol.

The working machine 1 further comprises a catalytic heater 120 configured to produce heated gases using the fuel from the fuel tank 112. Thus, the fuel supply system 110 is configured to power the catalytic heater 120. The catalytic heater 120 is typically configured for flameless operation. Thus, in use, gaseous or liquid fuel from the fuel tank 112 is supplied to the catalytic heater 120 by the fuel supply system 110 and used for producing heated gases by a flameless operation of the catalytic heater 120. The catalytic heater 120 may e.g. be configured to operate by catalytic combustion, generating heat through a flameless oxidation reaction between the fuel and oxygen in the presence of a catalyst. The catalyst in the catalytic heater 120 may e.g. consists of, or comprise a material selected from the group of: platinum; palladium; rhodium.

The working machine 1 further comprises a dump body heating system 130 configured to receive the heated gases from the catalytic heater 120 to heat the dump body 3. In the example of Fig. 1, the dump body heating system 130 comprises at least one channel 132 arranged within the dump body 3. The at least one channel 132 may be a plurality of channels. Thus, one or more channels 132 of the dump body heating system 130 may be comprised in the dump body 3. However, in the following, the one or more channels within the dump body heating system 130 is simply referred to as the channel 132. The channel 132 is arranged to distribute the heated gases from the catalytic heater 120 throughout the dump body 3. Thus, the channel 132 typically comprises a channel inlet 133 arranged to receive the heated gases from the catalytic heater 120, and a channel portion arranged downstream of the channel inlet 133 in which heat from the channel 132 can be transferred to the dump body 3. The channel portion arranged downstream of the channel inlet 133 is thus preferably integrated into the dump body 3, such as into a bottom of the dump body 3.

The channel 132 may comprise at least one channel outlet 134 arranged in the dump body 3 for discharging the heated gases to the surrounding. The outlet channel 134 is preferably arranged on an opposite side of the working machine 1 as compared to the cabin 2. Thus, in use, the channel 132 receives the heated gases from the catalytic heater 120 and transfers the heated gases to the channel outlet 134 via the channel portion arranged between the channel inlet 133 and channel outlet 134. As the heated gases are guided in the channel 132 towards the channel outlet 134, heat is transferred to the dump body 3 as the heated gases are cooled. The channel 132 (or channel portion between the channel inlet 133 and channel outlet 134) is preferably routed in a bottom portion of the dump body 3, and/or is preferably routed to cover a predefined surface area of the dump body 3 or bottom portion thereof (e.g. corresponding to a majority of the surface area of the dump body 3 or bottom portion thereof).

As shown in Fig. 1, the catalytic heater 120 is preferably mounted in, or onto the rear frame 1b of the working machine 1, e.g. the same frame supporting the dump body 3. The fuel supply system 110 may also be mounted in, or onto the rear frame 1b. However, as shown in Fig. 1, at least a part of the fuel supply system 110, e.g. the fuel tank 112, may be mounted in, or onto the front frame 1a.

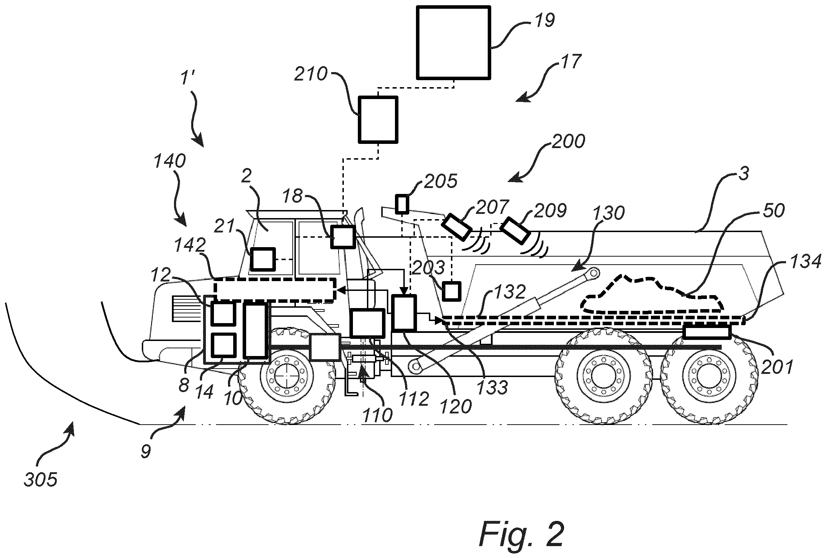

Turning to Fig. 2 showing an alternative example of a working machine 1'. The working machine 1' may in large correspond to that of working machine 1 of Fig. 1, why the same reference numerals are used for indicating corresponding features, typically without repetition thereof.

The working machine 1' may comprise a second heating system 140 configured to receive heated gases from the catalytic heater 120. Thus, the second heating system 140 is in addition to the dump body heating system 130. For example, the dump body heating system 130 and the second heating system 140 are independently operable. For example, the catalytic heater 120 may be arranged to provide heated gases to either of, or both, the dump body heating system 130 and the second heating system 140 for a given time. The second heating system 140 is configured to heat a component 2, 12, 14 of the working machine 1' externally of the dump body 3. Thus, the second heating system 140 is configured to heat a component 2, 12, 14 of the working machine 1' different to the dump body 3. For example, the second heating system 140 comprises a second heating unit 142 configured to receive the heated gases from the catalytic heater 120 and transfer the heat from the heated gases to heat the battery pack 12 or fuel cell 14 of the working machine 1'. The second heating unit 142 is e.g. a heat exchanger. Additionally, or alternatively, the second heating system 140 is configured to heat the cabin 2 of the working machine 1'.

The working machine 1' may comprise a monitoring arrangement 200. The monitor arrangement 200 may comprise one or more of the following: a sensor 201, e.g. a weight sensor, configured to measure the weight of the material 50 carried in the dump body 3; a thermal sensor 203 configured to measure the temperature of the dump body 3; an environmental sensor 205 configured to measure the surrounding temperature of the working machine 1; a sensor 207, e.g. a first optical sensor or camera configured to analyze the spectral properties of the material to infer its composition, e.g. with regards to water content or type of material, in order detect material composition of the material 50 carried in the dump body 3; a sensor 209, e.g. a second optical sensor or radar sensor configured to measure surface profiles or material thickness, in order detect the presence of material 50 adhered to the dump body 3.

The function of the working machine 1, 1' with regards to the dump body heating system 130 will now be described in detail with reference to Fig. 1, and with further reference to Fig. 2. In particular, the working machine 1, 1' comprises a control system 17 comprising processing circuitry 18 configured to control at least some operation of the fuel supply system 110, the catalytic heater 120 and the dump body heating system 130. The processing circuitry 18 may be configured to access data 210 from a memory 19 (shown in Fig. 2 only). The control system 17 may be at least partly be comprised in a control unit onboard the working machine, e.g. in an ECU of the working machine 1, 1'. For example, the processing circuitry 18 of the control system 17 may be comprised in an ECU of the working machine 1, 1'. However, at least part of the control system 17 may be arranged off-board the working machine 1, 1', such as e.g. a memory 19 in a cloud database.

The processing circuitry 18 is configured to determine a predefined condition associated with a risk of material 50 adhering to the dump body 3. Such predefined condition may be comprised in a predefined list and may be accessed by the processing circuitry 18 by transfer of data 210 from the memory 19. The predefined list may e.g. comprise a look-up table with the predefined conditions. Thus, the processing circuitry 18 may be configured to compare the current or upcoming conditions (e.g. based on input from the monitoring arrangement 200) with the predefined list in order to identify the predefined condition. Thus, for such identification of the predefined condition, the processing circuitry 18 may be configured to control the operation of the catalytic heater 120 and optionally the dump body heating system 130, as will be described in the following.

The processing circuitry 18 is further configured to, in response to identifying the predefined condition, activate the catalytic heater 120 by supplying fuel from the fuel tank 112. For example, the fuel supply system 110 may comprise a control valve configured to control the supply of fuel from the fuel tank 112 to the catalytic heater 120. Thus, the processing circuitry 18 may be configured to control such control valve. For example, the processing circuitry 18 may be configured to, in response to identifying the predefined condition, control the control valve (e.g. to open from a closed state) to supply fuel to activate the catalytic heater 120. Moreover, the catalytic heater 120 may comprise an on/off function for setting the catalytic heater 120 in an on-state and an off-state respectively, wherein the processing circuitry 18 is configured to, in response to identifying the predefined condition, activate the catalytic heater 120 by switching the on/off function to the on-state (e.g. setting the catalytic heater 120 in the on-state from the off-state).

The processing circuitry 18 is further configured to, in response to identifying an absence of the predefined condition, deactivate the catalytic heater 120 by ceasing the supply of fuel from the fuel tank 112. For example, the processing circuitry 18 may be configured to, in response to identifying the absence of the predefined condition, control the control valve (e.g. to close from an open state) to cease or stop fuel to deactivate the catalytic heater 120. Moreover, the processing circuitry 18 may be configured to, in response to identifying the absence of the predefined condition, deactivate the catalytic heater 120 by switching the on/off function to the off-state (e.g. setting the catalytic heater 120 in the off-state from the on-state).

With reference to the previously mentioned predefined condition associated with a risk of material 50 adhering to the dump body 3, and the processing circuitry 18 being configured to determine such predefined condition. For example, the processing circuitry 18 may be configured to receive input from the monitoring arrangement 200. The processing circuitry 18 may e.g. be configured to receive input data from the sensor 201 (or weight sensor), the thermal sensor 203, the environmental sensor 205, the sensor 207 (or first optical sensor or camera) and/or the sensor 209 (or second optical sensor or radar sensor). Moreover, the processing circuitry 18 may be configured to identify the predefined condition in response to input from the monitoring arrangement 200. The processing circuitry 18 may be configured to compare the received input with reference data, e.g. with one or more predefined lists, in order to determine the predefined condition. The predefined list may be comprised in the memory 19 and may be accessed by the processing circuitry 18 by data transfer 210 as previously described. Thus, the predefined condition may be defined at least by one of the following parameters or material adherence parameters (e.g. one or more of the material adherence parameters): the weight of material 50 carried in the dump body 3; the temperature of the dump body 3; the surrounding temperature of the working machine 1'; the material composition of the material 50 in the dump body 3; the presence of material 50 adhered to the dump body 3. The predefined condition may be defined by one of the material adherence parameters or by a combination of at least two of the material adherence parameters.

For example, in case the predefined condition is defined at least by the weight of the material 50 carried in the dump body 3, the processing circuitry 18 may be configured to compare the weight of the material 50 carried in the dump body 3 received from the sensor 201 with reference data 210 including a predefined first threshold value (e.g. a material adherence weight threshold). In response to determining that the weight of the material 50 carried in the dump body 3 is above the predefined first threshold value, the predefined condition is identified.

In another example, in case the predefined condition is defined at least by the temperature of the dump body 3, the processing circuitry 18 may be configured to compare the temperature of the dump body 3 received from the thermal sensor 203 with reference data 210 including a predefined second threshold value (e.g. a dump body temperature threshold). In response to determining that the temperature of the dump body 3 is below the predefined second threshold value, the predefined condition is identified.

In another example, in case the predefined condition is defined at least by the surrounding temperature of the working machine 1', the processing circuitry 18 may be configured to compare the surrounding temperature of the working machine 1' received from the environmental sensor 205 with reference data 210 including a predefined third threshold value (e.g. a surrounding temperature threshold). In response to determining that the surrounding temperature of the working machine 1' is below the predefined third threshold value, the predefined condition is identified.

In another example, in case the predefined condition is defined at least by the material composition of the material 50 in the dump body 3, the processing circuitry 18 may be configured to compare the material composition of the material 50 received from the sensor 207 with reference data 210 including a predefined list of material compositions. The predefined list may e.g. comprise predefined material types or predefined moisture contents deemed associated with a risk of adherence to the dump body 3, or a predefined list correlating the type of material or moisture content of the material with the risk of adherence of the material 50 to the dump body 3, e.g. by simply setting the value 0 for predefined materials or predefined moisture contents deemed to be associated with a low risk of adherence to the dump body 3, and the value 1 for predefined materials or predefined moisture contents deemed to be associated with a high risk of adherence to the dump body 3. In response to determining that the material composition of the material 50 in the dump body 3 is present in the predefined list of material compositions (or determined to be associated with a high risk of adherence to the dump body 3), the predefined condition is identified.

In some examples, the processing circuitry 18 is configured to identify the predefined condition by identifying that the material 50 carried by the dump body 3, or to be loaded to the dump body 3, has a material composition included in the predefined list of material compositions. Hereby, the processing circuitry 18 may be further configured to activate the catalytic heater 120 in response to identifying such predefined condition. Thus, the working machine 1, 1' and the dump body 3 may be preconditioned, or prepared, for receiving a material having a predefined material composition (typically associated with a high risk of adherence to the dump body 3).

In another example, in case the predefined condition is defined at least by the presence of material 50 adhered to the dump body 3, the processing circuitry 18 may be configured to compare the presence of material 50 adhered to the dump body received from the sensor 209 with reference data including a predefined fourth threshold value (e.g. a percentage of material detected threshold). In response to determining that the presence of the material 50 adhered to the dump body 3 is above the predefined fourth threshold value, the predefined condition is identified.

The control system 17 may include a user interface 21, e.g. arranged within the cabin 2, configured to allow an operator to adjust at least one of: the predefined first threshold value, the predefined second threshold value, the predefined third threshold value, the predefined list of material compositions, the predefined fourth threshold value. Hereby, the operator may adapt the outcome from the processing circuitry 18 with regards to the determination of the predefined condition.

Additionally, or alternatively, the user interface 21 may be configured to allow the operator to override the activation and deactivation of the catalytic heater 120 in response to the predefined condition. Hereby, the control system 17 is configured to enable manual activation or deactivation of the catalytic heater 120 independently of the predefined condition.

The processing circuitry 18 may be further configured to determine the temperature of the dump body 3 (e.g. by the sensor 203), and in response to that the temperature of the dump body 3 is above an upper predefined threshold, deactivate the catalytic heater 120 by ceasing the supply of fuel from the fuel tank 112. Hereby, overheating of the dump body 3 may be prevented.

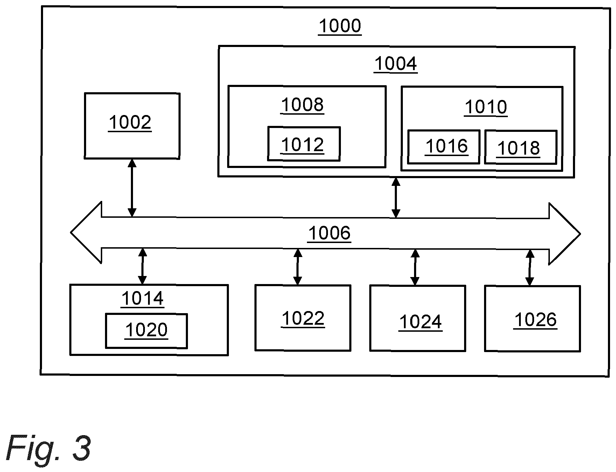

**FIG. 3** is a schematic diagram of a computer system 1000 for implementing examples disclosed herein, e.g. the operation of the control system 17 as described with reference to Figs. 1-2. The computer system 1000 may be implemented in the processing circuitry 18 of Figs. 1-2. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include a processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

Example 1. A working machine (1) having a dump body (3) configured to carry material (50), the working machine comprises: an electric drive line (8) comprising an electric traction machine (10) powered by a battery pack (12) or a fuel cell (14); a fuel supply system (110) including a fuel tank (112) configured to store gaseous or liquid fuel, the fuel supply system being separate and independent of the electric drive line; a catalytic heater (120) configured to produce heated gases using the fuel from the fuel tank; a dump body heating system (130) configured to receive the heated gases from the catalytic heater to heat the dump body; and a control system (17) comprising processing circuitry (18) configured to: determine a predefined condition associated with a risk of material adhering to the dump body; in response to identifying the predefined condition, activate the catalytic heater by supplying fuel from the fuel tank; and in response to identifying an absence of the predefined condition, deactivate the catalytic heater by ceasing the supply of fuel from the fuel tank.

Example 2. The working machine of example 1, further comprising a second heating system (140) configured to receive heated gases from the catalytic heater (120) to heat a component (2, 12, 14) of the working machine externally of the dump body (3).

Example 3. The working machine of example 2, wherein the second heating system (140) is configured to heat the battery pack (12) or fuel cell (14).

Example 4. The working machine of any of examples 2-3, wherein the second heating system (140) is configured to heat a cabin (2) of the working machine.

Example 5. The working machine of any of examples 1-4, wherein the processing circuitry (18) is further configured to receive input from a monitoring arrangement (200), the monitoring arrangement including at least one of: a sensor (201) configured to measure the weight of the material (50) carried in the dump body (3); a thermal sensor (203) configured to measure the temperature of the dump body; an environmental sensor (205) configured to measure the surrounding temperature of the working machine; a sensor (207) configured to detect material composition such as e.g. water content of the material carried in the dump body; a sensor (209) configured to detect the presence of material adhered to the dump body.

Example 6. The working machine of any of examples 1-5, wherein the predefined condition is defined at least by one of: the weight of material (50) carried in the dump body (3); the temperature of the dump body; the surrounding temperature of the working machine; the material composition; the presence of material adhered to the dump body.

Example 7. The working machine of example 6, wherein the predefined condition is defined at least by one of: the weight of material (50) carried in the dump body (3) is above a predefined first threshold value; the temperature of the dump body is below a predefined second threshold value; the surrounding temperature of the working machine is below a predefined third threshold value; the material composition is corresponding to a material composition included in a predefined list of material compositions; the presence of material adhered to the dump body is detected to be above a predefined fourth threshold value.

Example 9. The working machine of any of examples 7-8, wherein the control system (17) includes a user interface (21) configured to allow an operator to adjust at least one of: the predefined first threshold value, the predefined second threshold value, the predefined third threshold value, the predefined list of material compositions, the predefined fourth threshold value.

Example 10. The working machine of any of examples 7-9, wherein the control system (17) includes a user interface (21) configured to allow an operator to override the activation and deactivation of the catalytic heater (120) in response to the predefined condition, and thus enabling manual activation or deactivation of the catalytic heater independently of the predefined condition.

Example 11. The working machine of example 5 and any of examples 6-10, wherein the predefined condition is identified in response to input from the monitoring arrangement (200).

Example 12. The working machine of any of examples 1-11, wherein the fuel supply system (110) is a fossil-free fuel supply system wherein the fuel is selected from the group consisting of: hydrogen; biogas and bioethanol.

Example 13. The working machine of any of examples 1-12, wherein the dump body heating system (130) comprises at least one channel (132) arranged within the dump body (3), the at least one channel being arranged to distribute the heated gases from the catalytic heater (120) throughout the dump body.

Example 14. The working machine of example 13, further comprising at least one channel outlet (134) arranged in the dump body (3) for discharging the heated gases to the surrounding.

Example 15. The working machine of any of examples 1-14, wherein the processing circuitry (18) is further configured to determine the temperature of the dump body, and in response to that the temperature of the dump body is above an upper predefined threshold, deactivate the catalytic heater by ceasing the supply of fuel from the fuel tank.

Example 16. The working machine of any of examples 1-15, wherein the processing circuitry (18) is configured to identify the predefined condition by identifying that a material (50) carried by the dump body (3), or to be loaded to the dump body, has a material composition included in a predefined list of material compositions, and wherein the processing circuitry (18) is further configured to activate the catalytic heater (120) in response to identifying the predefined condition.

Example 17. The working machine of any of examples 1-16, wherein the catalytic heater (120) is configured for flameless operation.

Example 18. The working machine of any of examples 1-17, wherein the catalytic heater (120) is configured to operate by catalytic combustion, generating heat through a flameless oxidation reaction between the fuel and oxygen in the presence of a catalyst.

Example 19. The working machine of any of examples 1-18, wherein the catalyst in the catalytic heater (120) consists of or comprises a material selected from the group of: platinum; palladium; rhodium.

Example 20. The working machine of any of examples 1-19 being an autonomously driven working machine.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

**1.** A working machine (1, 1') having a dump body (3) configured to carry material (50), the working machine comprises:
- an electric drive line (8) comprising an electric traction machine (10) powered by a battery pack (12) or a fuel cell (14);
- a fuel supply system (110) including a fuel tank (112) configured to store gaseous or liquid fuel, the fuel supply system being separate and independent of the electric drive line;
- a catalytic heater (120) configured to produce heated gases using the fuel from the fuel tank;
- a dump body heating system (130) configured to receive the heated gases from the catalytic heater to heat the dump body; and
- a control system (17) comprising processing circuitry (18) configured to:
- determine a predefined condition associated with a risk of material adhering to the dump body;
- in response to identifying the predefined condition, activate the catalytic heater by supplying fuel from the fuel tank; and
- in response to identifying an absence of the predefined condition, deactivate the catalytic heater by ceasing the supply of fuel from the fuel tank.

**2.** The working machine (1') of claim 1, further comprising a second heating system (140) configured to receive heated gases from the catalytic heater (120) to heat a component (2, 12, 14) of the working machine externally of the dump body (3).

**3.** The working machine (1') of claim 2, wherein the second heating system (140) is configured to heat the battery pack (12) or fuel cell (14).

**4.** The working machine (1') of any of claims 2-3, wherein the second heating system (140) is configured to heat a cabin (2) of the working machine.

**5.** The working machine (1') of any of claims 1-4, wherein the processing circuitry (18) is further configured to receive input from a monitoring arrangement (200), the monitoring arrangement including at least one of: a sensor (201) configured to measure the weight of the material (50) carried in the dump body (3); a thermal sensor (203) configured to measure the temperature of the dump body; an environmental sensor (205) configured to measure the surrounding temperature of the working machine; a sensor (207) configured to detect material composition such as e.g. water content of the material carried in the dump body; a sensor (209) configured to detect the presence of material adhered to the dump body.

**6.** The working machine (1, 1') of any of claims 1-5, wherein the predefined condition is defined at least by one of: the weight of material (50) carried in the dump body (3); the temperature of the dump body; the surrounding temperature of the working machine; the material composition; the presence of material adhered to the dump body.

**7.** The working machine (1, 1') of claim 6, wherein the predefined condition is defined at least by one of: the weight of material (50) carried in the dump body (3) is above a predefined first threshold value; the temperature of the dump body is below a predefined second threshold value; the surrounding temperature of the working machine is below a predefined third threshold value; the material composition is corresponding to a material composition included in a predefined list of material compositions; the presence of material adhered to the dump body is detected to be above a predefined fourth threshold value.

**9.** The working machine (1') of any of claims 7-8, wherein the control system (17) includes a user interface (21) configured to allow an operator to adjust at least one of: the predefined first threshold value, the predefined second threshold value, the predefined third threshold value, the predefined list of material compositions, the predefined fourth threshold value.

**10.** The working machine (1') of any of claims 7-9, wherein the control system (17) includes a user interface (21) configured to allow an operator to override the activation and deactivation of the catalytic heater (120) in response to the predefined condition, and thus enabling manual activation or deactivation of the catalytic heater independently of the predefined condition.

**11.** The working machine (1, 1') of any of claims 1-10, wherein the fuel supply system (110) is a fossil-free fuel supply system wherein the fuel is selected from the group consisting of: hydrogen; biogas and bioethanol.

**12.** The working machine (1, 1') of any of claims 1-11, wherein the dump body heating system (130) comprises at least one channel (132) arranged within the dump body (3), the at least one channel being arranged to distribute the heated gases from the catalytic heater (120) throughout the dump body.

**13.** The working machine (1, 1') of claim 12, further comprising at least one channel outlet (134) arranged in the dump body (3) for discharging the heated gases to the surrounding.

**14.** The working machine (1, 1') of any of claims 1-13, wherein the processing circuitry (18) is further configured to determine the temperature of the dump body, and in response to that the temperature of the dump body is above an upper predefined threshold, deactivate the catalytic heater by ceasing the supply of fuel from the fuel tank.

**15.** The working machine (1, 1') of any of claims 1-14, wherein the processing circuitry (18) is configured to identify the predefined condition by identifying that a material (50) carried by the dump body (3), or to be loaded to the dump body, has a material composition included in a predefined list of material compositions, and wherein the processing circuitry (18) is further configured to activate the catalytic heater (120) in response to identifying the predefined condition.
